# EUROPÄISCHE PATENTANMELDUNG

(11) **EP 0 692 725 A2**
(43) Veröffentlichungstag der Anmeldung: **17.01.1996**
(21) Anmeldenummer: 95108810.3
(22) Anmeldetag: 08.06.1995
(51) Int. Cl.: G02B 6/42

(54) **Verfahren und Anordnung zum Befüllen von Vertiefungen mit einer Flüssigkeit, insbesondere mit einem Kleber**

(30) Priorität: 08.07.1994 DE 4424013
(71) Anmelder: ANT Nachrichtentechnik GmbH, D-71522 Backnang (DE)
(72) Erfinder: Fritscher, Raimund, D-71576 Brugstetten (DE); Hauer, Heiner, D-70734 Fellbach (DE); Kuke, Albrecht, Dr., D-71549 Auenwald (DE); Scholz, Werner, D-71554 Weissach im Tal (DE)

(57) **Zusammenfassung**

Bei bekannten Verfahren und Anordnungen treten Schwierigkeiten mit Lufteinschlüssen und unvollkommenen Befüllungen auf. Diese Probleme werden bei der erfindungsgemäßen Anordnung und dem entsprechenden Verfahren vermieden.

Eine Siliziumträgerplatte (1) weist Vertiefungen (2,3) auf, die durch anisotropes Ätzen hergestellt werden. In die Vertiefungen (2,3) werden Faserenden (4) und Bauelemente (7) eingebracht. Eine weitere Vertiefung (10) ist vorgesehen, die als Kleberreservoir dient. Sie ist über einen Durchgang (11) mit einer Vertiefung (2,3) verbunden. Vom Kleberreservoir (10) aus breitet sich der Kleber durch Kapillarwirkung durch den Durchgang (11) in die Vertiefung (2,3) aus. Mittels des Verfahrens kann ein optisch transparenter Kleber oder ein Gel zur Indexanpassung eingebracht werden.

## Beschreibung

Die Erfindung betrifft ein Verfahren zum Befüllen von Vertiefungen mit einer Flüssigkeit, insbesondere mit einem Kleber, nach dem Oberbegriff des Patentanspruches 1 und eine entsprechende Anordnung nach dem Oberbegriff des Patentanspruches 5.

Eine sehr vorteilhafte Methode zur Ankopplung einer optischen Faser an eine Photodiode wird in der Schrift DE 35 43 558 A1 beschrieben. Dabei wird in einer Trägerplatte eine Nut mit einer abgeschrägten Stirnseite erzeugt. Vorzugsweise besteht die Trägerplatte aus einkristallinem Silizium mit einer (100)-Orientierung der Oberfläche, in welche die Nut durch anisotropes Ätzen erzeugt wird. Dabei hat die Nut einen V-förmigen Querschnitt mit einem Böschungswinkel der Seitenflächen von 54,7°. Die Stirnfläche der V-Nut hat ebenfalls einen Böschungswinkel von 54,7°. Die V-Nut wird so breit gewählt, daß eine eingelegte Faser mit ihrer obersten Mantellinie gerade in der Ebene der Trägeroberfläche oder leicht unter dieser Oberfläche zu liegen kommt. Die Faser wird bis an die geneigte Stirnfläche der Nut herangeschoben. Das aus der Faser austretende Licht wird an der zu diesem Zweck verspiegelten Stirnfläche der Nut nach oben reflektiert und trifft dort in eine auf der Trägeroberfläche montierte Photodiode. Vorteilhaft an dieser Art der Montage ist, daß die Photodiode hier nicht auf einem Zwischenträger senkrecht zur Faserrichtung montiert werden muß, sondern planar auf den Träger aufgesetzt werden kann. Weiterhin ist es vorteilhaft, wenn der Raum zwischen der Stirnfläche der Faser und der Photodiode mit einem transparenten Kleber ausgefüllt ist. Der Vorteil bei der Auffüllung des Zwischenraumes mit Kleber liegt darin, daß erstens die Reflexionsverluste durch fresnelsche Reflexionen durch Angleichung der Brechungsindizes an der Faserstirnseite verringert werden und daß zweitens der Öffnungswinkel des austretenden Bündels infolge des höheren Brechungsindexes des Klebers gegenüber der Luft verringert wird. Dadurch wird der aus der Faser austretende Freistrahl beim Eintritt in die andere Faser bzw. hier in die Photodiode weniger stark aufgeweitet und somit der Koppelwirkungsgrad verbessert. Der Kleber dient gleichzeitig zur Fixierung der Faser in der Nut.

Die Einbringung von Kleber in den besagten Zwischenraum kann jedoch zu Problemen bezüglich der Lichtausbreitung des Freistrahls führen, wenn der Kleber entweder den Raum zwischen der Faser und der Photodiode nicht vollkommen ausfüllt oder wenn Luftblasen im Kleber verbleiben. Wenn der Kleber den Raum nicht vollständig ausfüllt, bleibt eine Grenzfläche zwischen Kleber und Luft zurück. Wenn diese Grenzfläche das Freistrahlbündel schneidet, so wird das Licht dort teilreflektiert und gebrochen. Dies kann dazu führen, daß der Koppelwirkungsgrad drastisch verschlechtert wird. Im Kleber befindliche Luftblasen haben optisch die Wirkung von Streulinsen. Auch dadurch wird der Koppelwirkungsgrad erheblich verschlechtert.

Bringt man den Kleber zur Faserfixierung und Indexanpassung auf bevor die Photodiode montiert worden ist, so kann man zwar den Klebevorgang visuell beobachten. Die Füllhöhe des Klebers in der Nut ist dann aber sehr kritisch. Ist die Füllhöhe zu niedrig, so entsteht nach der Montage der Photodiode zwischen der Kleberoberfläche und der Photodiode ein Luftspalt mit den oben erwähnten Nachteilen. Ist die Füllhöhe zu hoch, so erhält man Probleme bei der Montage der Photodiode. Montiert man zuerst die Photodiode, so gibt es zwei Möglichkeiten zur Montage. Entweder man füllt zunächst die Nut unter der Photodiode mit noch weichem Kleber und schiebt die Faser in diesen Kleber hinein oder man legt zuerst die Faser in die Nut bis unter die Photodiode und fügt dann den Kleber hinzu. In beiden Fällen ist der Kleber unterhalb der Photodiode nicht mehr zu kontrollieren. Schiebt man die Faser in den vorher eingebrachten Kleber, so besteht die Gefahr, daß man eine Luftblase mit einschiebt. Wird der Kleber nachträglich eingebracht, so ist ein sicheres Verfahren erforderlich, welches die Gewähr gibt, daß der Kleber den Raum zwischen der Faser und der Photodiode vollständig und blasenfrei ausfüllt. Die Auffüllung des Zwischenraumes zwischen zwei stirnseitig zu verbindenden Lichtleitfasern ist aus der Schrift EP 136 201 B1 bekannt.

Die Aufgabe der vorliegenden Erfindung ist es, ein Verfahren und eine Anordnung zum Befüllen von Vertiefungen mit einer Flüssigkeit, insbesondere mit einem Kleber, vorzuschlagen, die obige Nachteile vermeiden.

Die Aufgabe wird gelöst durch ein Verfahren mit den Merkmalen des Patentanspruches 1 und durch eine Anordnung mit den Merkmalen des Patentanspruches 5. Vorteilhafte Weiterbildungen sind jeweils in den Unteransprüchen angegeben.

Die Erfindung geht davon aus, daß zunächst in eine Siliziumträgerplatte die für Lichtleitfaserenden und/oder optische oder optoelektronische Bauelemente vorgesehenen Vertiefungen anisotrop geätzt werden. In vorteilhafter Weise wird im selben Arbeitsgang zumindest eine weitere Vertiefung geätzt, die mit zumindest einer mit Kleber zu befüllenden Vertiefung über einen Durchgang verbunden ist. Danach werden die Bauelemente und Lichtleitfaserenden eingebracht und vorläufig fixiert. Dann wird ein optisch transparenter Kleber in die weitere Vertiefung eingefügt. Dieser breitet sich aufgrund der Kapillarwirkung durch den Durchgang in die vorgesehenen Vertiefungen aus.

Das Verfahren ist auch auf Gele oder Flüssigkeiten zur Indexanpassung anwendbar. Unter Flüssigkeiten sind dabei alle viskosen Materialien zu verstehen, die in den vorgegebenen Vertiefungen mit Bauelementen etc. fließen.

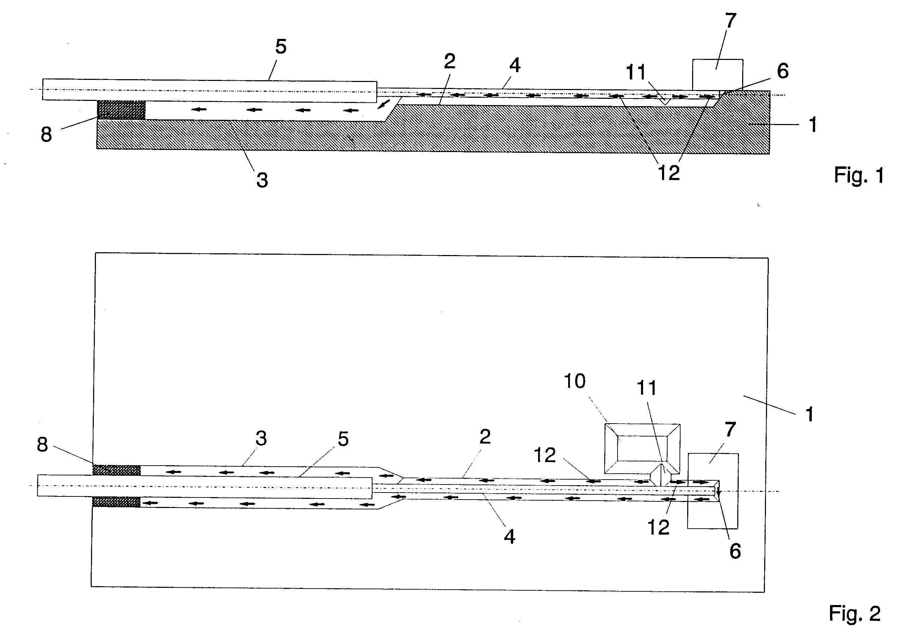

Die Erfindung wird anhand der Abbildungen beschrieben. Die Figuren 1 und 2 zeigen ein erfindungsgemäßes Ausführungsbeispiel im Längsschnitt und Aufsicht.

Auf eine Trägerplatte 1, die vorzugsweise aus Silizium besteht, ist eine V-Nut mit einem schmalen ersten Teil 2 und einem Breiten zweiten Teil 3 durch anisotropes Ätzen hergestellt. In diese V-Nut ist ein Lichtleitfaserende eingelegt, dessen vorderes Teil keinen Primärschutz aufweist und in den schmalen Teil 2 der V-Nut eingelegt ist, dessen mit Primärschutz 5 versehenes Teil in den breiteren Teil 3 der V-Nut eingelegt ist. Die Breite der V-Nut ist dabei so gewählt, daß die oberste Mantellinie der Faser gerader in der Oberflächenebene des Trägers 1 oder leicht darunter zu liegen kommt. An der verspiegelten Stirnfläche 6 der V-Nut 2 wird das aus dem Faserende 4 austretende Lichtbündel nach oben reflektiert und trifft auf die Photodiode 7. Der Raum zwischen der Faserstirnfläche und der Photodiode ist mit Kleber gefüllt.

Zur Durchführung der Montage und zum Einbringen des Klebers wird folgendes Verfahren vorgeschlagen:
Zuerst wird die Photodiode 7 auf die Mikromechanisch strukturierte Silizium-Trägerplatte 1 montiert, wobei die genaue Positionierung der Photodiode entsprechend dem Stand der Technik durch Justagemarken erleichtert werden kann. Als nächstes wird die Faser 4 in die V-Nut 2 eingelegt und unter die Photodiode 7 bis zum Anschlag an die Stirnseite 6 geschoben. Der mit Primärschutz versehene hintere Teil der Faser kommt dabei in den breiteren Teil 3 der V-Nut zu liegen und wird dort zunächst mit einem Kleber 8, der nicht optisch transparent sein muß, vorfixiert. Zum blasenfreien und vollständigen Ausfüllen der V-Nut 2 ist ein Kleberreservoir 10 durch anisotropes Ätzen auf dem Silizium-Träger hergestellt. Das Kleberreservoir 10 liegt dabei möglichst nahe an der Stirnfläche 6 der V-Nut aber noch so weit entfernt, daß die Montage der Photodiode nicht behindert wird. Das Kleberreservoir 10 ist über einen Durchgang 11 mit der V-Nut verbunden. Der Durchgang 11 wird ebenfalls durch anisotropes Ätzen hergestellt. Dabei ist zu beachten, daß hierbei konvexe Ecken zwischen dem Durchgang 11 einerseits und der V-Nut 2 und dem Kleberreservoir 10 andererseits entstehen. Solche konvexen Ecken sind gegenüber dem anisotropen Ätzangriff nicht stabil sondern werden mit etwa gleicher Geschwindigkeit wie bei der Tiefenätzung angegriffen. Dies muß bei der Auslegung der Ätzmaske entsprechend berücksichtigt werden. In dieses Kleberreservoir wird ein optisch transparenter Kleber 12 eingebracht, der über den Durchgang 11 in die V-Nut 2 läuft. Das vorgewählte Volumen des Kleberreservoirs 10 mit dem Durchgang 11 erleichtert dabei die genaue Dosierung und punktgenaue Positionierung des Klebers 12, was besonders bei automatischen Kleberzuführungsvorrichtungen von Vorteil ist. Infolge der Kapillarwirkung läuft der Kleber entlang der an der Seitenfläche der V-Nut anliegenden Faser in beide Richtungen, wie die Pfeile in den Figuren 1 und 2 andeuten. Der Raum zwischen der Faserstirnfläche, der V-Nut-Stirnfläche und der Photodiode wird dabei vollständig und blasenfrei durch den Kleber aufgefüllt, weil zunächst die beim Kleberreservoir gegenüberliegende Faserseite noch frei von Kleber ist. Die Luft unter der Photodiode kann dadurch beim Einfließen des Klebers entweichen. Wenn der Raum unter der Photodiode vollständig aufgefüllt ist, so fließt der Kleber auch auf die andere Seite der Faser und bewirkt dadurch eine sichere Fixierung der Faser.

Die Aushärtung des Klebers geschieht je nach Art des Klebers durch Bestrahlung mit UV-Licht oder durch Erwärmung oder durch eine Kombination von UV-Licht und Erwärmung. Um eine fertigungsgerechte Montage großer Stückzahlen zu erreichen ist es erforderlich, daß das Modul nicht zu lange in der Montagevorrichtung während des Aushärtens verbleiben muß und daß die Topfzeit des Klebers möglichst lang ist. UV-aushärtende Kleber haben den Vorteil, daß sie eine sehr lange Topfzeit besitzen und andererseits bei Bestrahlung mit UV-Licht in Sekundenschnelle aushärten, während thermisch härtende Kleber eine längere Zeit um Aushärten benötigen und in dieser Zeit das Modul in der Montagevorrichtung bleiben muß. Die Anwendung von UV-härtenden Klebern hat aber in diesem Anwendungsfall den Nachteil, daß der Bereich unterhalb der Photodiode für das UV-Licht abgeschattet ist und daher der Kleber dort nicht aushärtet. Um dieses Problem zu lösen wird erfindungsgemäß vorgeschlagen, einen Kleber zu verwenden, der bei einer geringen UV-Lichtbestrahlung zwar noch flüssig bleibt, aber die Fähigkeit erhält, bei einer nachfolgenden thermischen Behandlung auszuhärten. Dieser Kleber wird vor der Anwendung mit einer geringen UV-Lichtdosis bestrahlt, dann fließt er, wie oben beschrieben, über das Kleberreservoir in die V-Nut ein und wird anschließend mit einer hohen UV-Lichtdosis bestrahlt. Die vom UV-Licht erreichbaren Bereiche des Klebers härten dann sehr schnell aus, so daß das Modul aus der Montagevorrichtung entnommen werden kann. Der Kleber im Schattenbereich ist dann noch flüssig. Infolge der Vorbestrahlung mit einer geringen UV-Lichtdosis kann er aber auf einfach Weise in einem Ofen thermisch ausgehärtet werden. Dadurch wird die Verweilzeit des Moduls in der Montagevorrichtung nicht durch die thermische Aushärtezeit des Klebers bestimmt.

## Patentansprüche

1. Verfahren zum Befüllen von Vertiefungen mit einer Flüssigkeit, insbesondere mit einem Kleber, mit folgenden Verfahrensschritten:
- Herstellen von Vertiefungen (2,3) für Lichtleitfaserenden (4) und/oder optische oder optoelektronische Bauelemente (7) auf einer Trägerplatte (1) aus Silizium durch anisotropes Ätzen;
- Einbringen der optischen oder optoelektronischen Bauelemente (7) und Lichtleitfaserenden (4) in die entsprechenden Vertiefungen (2,3);
- Einbringen der Flüssigkeit in die Vertiefungen unter Ausnutzung der Kapillarwirkung zur Ausbreitung der Flüssigkeit, dadurch gekennzeichnet,
daß mit den Vertiefungen (2,3) eine weitere Vertiefung (10) als Flüssigkeitsreservoir anisotrop geätzt wird, daß zwischen der weiteren Vertiefung (10) und einer mit Flüssigkeit zu befüllenden Vertiefung (2,3) eine Durchgangsöffnung hergestellt wird und daß die Flüssigkeit in die weitere Vertiefung (10) eingebracht wird.

2. Verfahren nach Anspruch 1, dadurch gekennzeichnet, daß die als Flüssigkeitsreservoir dienende weitere Vertiefung (10) in der Nähe von kritischen Befüllungspunkten, beispielsweise nahe den Lichtleitfaserenden, mit einer zu befüllenden Vertiefung verbunden wird.

3. Verfahren nach einem der Ansprüche 1 oder 2, dadurch gekennzeichnet,
daß ein UV-aushärtbarer Kleber eingesetzt wird.

4. Verfahren nach Anspruch 3, dadurch gekennzeichnet, daß der Kleber nach einer Vorbehandlung mit UV-Licht geringer Dosis flüssig bleibt und nach der abschließenden UV-Behandlung durch eine Wärmebehandlung ausgehärtet wird.

5. Anordnung zum Befüllen von Vertiefungen mit einer Flüssigkeit, insbesondere mit einem Kleber, mit folgenden Merkmalen:
- es ist eine Trägerplatte (1) aus Silizium vorgesehen,
- die Trägerplatte (1) weist anisotrop geätzte Vertiefungen (2,3) zum Einbringen von Lichtleitfaserenden (4) und/oder optischen oder optoelektronischen Bauelementen (7) auf, dadurch gekennzeichnet,
daß eine weitere Vertiefung (10) vorgesehen ist, die als Flüssigkeitsreservoir dient und daß die weitere Vertiefung (10) über einen Durchbruch mit einer mit Flüssigkeit zu befüllenden Vertiefung (2,3) verbunden ist.

6. Anordnung nach Anspruch 5, dadurch gekennzeichnet, daß der Durchbruch ebenfalls durch anisotropes Ätzen hergestellt ist.

7. Anordnung nach einem der Ansprüche 5 oder 6, dadurch gekennzeichnet,
daß eine V-Nut (2,3) mit einer abgeschrägten Stirnfläche (6), mit einem Lichtleitfaserende (4) und mit einer über der Stirnfläche befindlichen Diode (7) vorgesehen ist und daß die weitere Vertiefung (10) nahe der Stirnfläche (6) der V-Nut (2) mit dieser durch den Durchbruch (11) verbunden ist.
